(19) Europäisches Patentamt
European Patent Office
Office européen des brevets

(11) EP 3 223 033 A1

(12) EUROPÄISCHE PATENTANMELDUNG

(43) Veröffentlichungstag:
27.09.2017 Patentblatt 2017/39

(51) Int Cl.:
G01S 13/93 (2006.01)   G01S 7/35 (2006.01)
G01S 7/292 (2006.01)   G01S 15/93 (2006.01)

(21) Anmeldenummer: 17158081.4

(22) Anmeldetag: 27.02.2017

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA MD

(30) Priorität: 29.02.2016 DE 102016103517

(71) Anmelder: Valeo Schalter und Sensoren GmbH
74321 Bietigheim-Bissingen (DE)

(72) Erfinder: Afrasiabi, Hamid Vayghan
74321 Bietigheim-Bissingen (DE)

(54) VERFAHREN ZUM BESTIMMEN EINES RAUSCHPEGELS EINES EMPFANGSSIGNALS IN EINEM KRAFTFAHRZEUG-SENSOR

(57) Die Erfindung betrifft ein Verfahren zum Bestimmen eines Rauschpegels in einem von einer fahrzeugseitigen Sensoreinrichtung (4) aus einem Umgebungsbereich (7) eines Kraftfahrzeugs (1) empfangenen Empfangssignal (10), wobei bei dem Verfahren Amplitudenwerte (E11, E12, E1m, E21, E22, Em1, Emn) von Signalanteilen in dem Empfangssignal (10) bestimmt werden, wobei die Signalanteile anhand ihrer Amplitudenwerte (E11, E12, E1m, E21, E22, Em1, Emn) jeweiligen Amplitudenwertklassen zugeteilt werden (S1), für jede Amplitudenwertklasse jeweils eine Häufigkeit der ihr zugeteilten Signalanteile bestimmt wird (S2), die Häufigkeiten der Amplitudenwertklassen zumindest bis zu derjenigen Amplitudenwertklasse zu einer kumulativen Häufigkeit aufsummiert werden, bei welcher die kumulative Häufigkeit zumindest einem vorbestimmten Grenzwert entspricht (S3) und zumindest anhand derjenigen Amplitudenwertklasse, bei welcher die kumulative Häufigkeit zumindest dem vorbestimmten Grenzwert entspricht, der Rauschpegel bestimmt wird (S4). Die Erfindung betrifft außerdem eine Rechenvorrichtung (3), ein Fahrerassistenzsystem (2) sowie ein Kraftfahrzeug (1).

Fig.2

EP 3 223 033 A1

**Beschreibung**

Die Erfindung betrifft ein Verfahren zum Bestimmen eines Rauschpegels in einem von einer fahrzeugseitigen Sensoreinrichtung aus einem Umgebungsbereich eines Kraftfahrzeugs empfangenen Empfangssignals, wobei bei dem Verfahren Amplitudenwerte von Signalanteilen in dem Empfangssignal bestimmt werden. Die Erfindung betrifft außerdem eine Rechenvorrichtung, ein Fahrerassistenzsystem sowie ein Kraftfahrzeug.

Vorliegend richtet sich das Interesse auf Sensoreinrichtungen für Kraftfahrzeuge, mittels welchen ein Umgebungsbereich des Kraftfahrzeugs überwacht werden kann. Solche Sensoreinrichtungen können beispielsweise Radarsensoreinrichtungen oder Ultraschallsensoreinrichtungen sein. Mittels dieser Sensoreinrichtungen können Objekte in dem Umgebungsbereich des Kraftfahrzeugs erfasst beziehungsweise erkannt werden. Außerdem können mittels der Sensoreinrichtungen ein Abstand zwischen dem Kraftfahrzeug und dem Objekt sowie eine Geschwindigkeit des Objektes detektiert werden. Dazu arbeiten die Sensoreinrichtungen üblicherweise nach dem Echolot-Prinzip. Dies bedeutet, dass die Sensoreinrichtung ein Sendesignal, beispielsweise in Form von einer elektromagnetischen Welle, aussendet, welches von dem Objekt in den Umgebungsbereich des Kraftfahrzeugs reflektiert wird. Das reflektierte Sendesignal wird als Empfangssignal wieder von der Sensoreinrichtung empfangen. Anhand einer Laufzeit zwischen dem Aussenden des Sendesignals und dem Empfangen des Empfangssignals kann der Abstand zwischen der Sensoreinrichtung und dem Objekt bestimmt werden. Anhand einer Doppelverschiebung kann die Geschwindigkeit des Objektes bestimmt werden. Das Empfangssignal weist dabei eine Vielzahl von über einen Laufzeitbereich dargestellten Signalanteilen auf, wobei die an dem Objekt reflektierten Signalanteile, die sogenannten Nutzsignalanteile, dabei üblicherweise vor einem Hintergrundrauschen, den sogenannten Rauschsignalanteilen, dargestellt werden.
Das Empfangssignal wird zur Analyse der Signalanteile zunächst der Fourier-Transformation, nämlich der FFT (Fast Fourier Transformation), unterzogen und somit ein Frequenzspektrum des Empfangssignals bestimmt. Die Signalanteile beziehungsweise Nutzsignalanteile, welche von der Reflexion an dem Objekt stammen, sind durch Spitzen in dem Empfangsspektrum repräsentiert. Bei der FFT werden üblicherweise für eine Vielzahl von Frequenzwerten (und genauer gesagt von kleinen Frequenzintervallen) Leistungswerte des Empfangssignals bestimmt. Diese Leistungswerte sind auch unter der Bezeichnung "FFT-Bin" bzw. "Frequenzbin" bekannt. Die FFT liefert also eine Vielzahl von Frequenzbins, welche jeweils einen Amplitudenwert für einen bestimmten Frequenzbereich bzw. einen bestimmten Frequenzwert repräsentieren. Diese Frequenzbins werden dabei üblicherweise in einer sogenannten Range-Doppler-Matrix beziehungsweise einer Abstands-Geschwindigkeits-Matrix angeordnet, indem jedem Frequenzbin ein diskreter Abstandswert, ein sogenannter Range-Bin, und ein diskreter Geschwindigkeitswert, ein sogenannter Doppler-Bin, zugeordnet werden.

Zum zuverlässigen Detektieren des Objektes sowie zur Bestimmung von dessen Abstand und dessen Geschwindigkeit müssen die Nutzsignalanteile von den Rauschsignalanteilen unterschieden werden können. Dazu wird üblicherweise zumindest ein Schwellwert beziehungsweise eine Detektionsschwelle vorgegeben, mit welchem die Amplitudenwerte der Signalanteile in dem Empfangssignal, also die Einträge der Range-Doppler-Matrix, verglichen werden. Wenn ein Amplitudenwert eines Signalanteils den Schwellwert überschreitet, so wird dieser Signalanteil als Nutzsignalanteil identifiziert. Wenn ein Amplitudenwert eines Signalanteils den Schwellwert unterschreitet, so wird dieser Signalanteil als Rauschsignal identifiziert. Der Schwellwert wird dabei üblicherweise derart bestimmt, dass eine möglichst geringe, konstante Falschalarmrate bereitgestellt wird. Dies wird auch als CFAR-Verfahren (CFAR- Constant False Alarm Rate) bezeichnet. Unter Falschalarmen sind dabei diejenigen Rauschsignalanteile zu verstehen, deren Amplitudenwerte den Schwellwert überschreiten und daher fälschlicherweise als Nutzsignalanteile identifiziert werden. Um die Falschalarmrate konstant einzustellen, wird der Schwellwert üblicherweise dynamisch, beispielsweise an Umgebungsbedingungen angepasst. Der Schwellwert wird dabei beispielsweise in Abhängigkeit von einer Laufzeit der Signalanteile des Empfangssignals, und damit in Abhängigkeit von einem Abstandsbereich, in welchem die Sensoreinrichtung Objekte in dem Umgebungsbereich des Kraftfahrzeugs detektiert, eingestellt.

Der Schwellwert wird dabei üblicherweise basierend auf dem Rauschpegel des Grundrauschens in dem von der Sensorenrichtung empfangenen Empfangssignal geschätzt. Dazu werden die Signalanteile in dem Empfangssignal üblicherweise ihrer Größe nach sortiert und in einer Folge angeordnet. Der Amplitudenwert eines der Signalanteile, welches sich an einer vorbestimmten Position in dieser sortierten Folge befindet, also welches eine vorbestimmten Index in der Folge aufweist, wird als der Rauschpegel festgelegt. Daraus ergibt sich jedoch der Nachteil, dass die Amplitudenwerte zunächst ihrer Größe nach sortiert werden müssen, was jedoch im Hinblick auf Rechzeit und Rechaufwand besonders aufwändig ist.

In der EP 1 804 076 A2 ist ein Verfahren zum Bestimmen des Schwellwertes beschrieben, bei welchem eine Vielzahl von Perzentilen bestimmt wird, welche zu Frequenzanteilen eines Signals im Frequenzbereich gehören. Aus diesen Perzentilen wird dann der Schwellwert bestimmt.

Es ist Aufgabe der vorliegenden Erfindung, eine Lösung bereitzustellen, wie ein Rauschpegel in einem von einer Sensoreinrichtung empfangenen Empfangssignal einfach und schnell bestimmt werden kann.

Diese Aufgabe wird erfindungsgemäß durch ein Verfahren, eine Rechenvorrichtung, ein Fahrerassistenzsystem sowie ein Kraftfahrzeug gemäß den jeweiligen unabhängigen Patentansprüchen gelöst. Vorteilhafte Ausführungsformen der Erfindung sind Gegenstand der abhängigen Patentansprüche, der Beschreibung sowie der Figuren.

Bei einer Ausführungsform eines erfindungsgemäßen Verfahrens zum Bestimmen eines Rauschpegels in einem von einer fahrzeugseitigen Sensoreinrichtung aus einem Umgebungsbereich eines Kraftfahrzeugs empfangenen Empfangssignal werden insbesondere Amplitudenwerte von Signalanteilen in dem Empfangssignal bestimmt. Dabei werden die Signalanteile zumindest teilweise insbesondere anhand ihrer Amplitudenwerte jeweiligen Amplitudenwertklassen zugeteilt. Außerdem wird für jede Amplitudenwertklasse insbesondere eine Häufigkeit der ihr zugeteilten Signalanteile bestimmt. Schließlich werden die Häufigkeiten der Amplitudenwertklasse insbesondere bis zu derjenigen Amplitudenwertklasse zu einer kumulativen Häufigkeit aufsummiert, bei welcher die kumulative Häufigkeit zumindest einem vorbestimmten Grenzwert entspricht. Anhand derjenigen Amplitudenwertklasse, bei welcher die kumulative Häufigkeit zumindest dem vorbestimmten Grenzwert entspricht, wird der Rauschpegel bestimmt.

Bevorzugt werden bei einem erfindungsgemäßen Verfahren zum Bestimmen eines Rauschpegels in einem von einer fahrzeugseitigen Sensoreinrichtung aus einem Umgebungsbereich eines Kraftfahrzeugs empfangenen Empfangssignal Amplitudenwerte von Signalanteilen in dem Empfangssignal bestimmt. Die Signalanteile werden zumindest teilweise anhand ihrer Amplitudenwerte jeweiligen Amplitudenwertklassen zugeteilt. Für jede Amplitudenwertklasse wird jeweils eine Häufigkeit der ihr zugeteilten Signalanteile bestimmt. Die Häufigkeiten der Amplitudenwertklassen werden zumindest bis zu derjenigen Amplitudenwertklasse zu einer kumulativen Häufigkeit aufsummiert, bei welcher die kumulative Häufigkeit zumindest einem vorbestimmten Grenzwert entspricht.

Anhand derjenigen Amplitudenwertklasse, bei welcher die kumulative Häufigkeit zumindest dem vorbestimmten Grenzwert entspricht, wird der Rauschpegel bestimmt.

Das Verfahren betrifft den Betrieb einer Sensoreinrichtung eines Kraftfahrzeugs, insbesondere einer Radarsensoreinrichtung eines Kraftfahrzeugs, der eingangs genannten Art. Eine solche Radarsensoreinrichtung kann beispielsweise ein 79 GHz Radar sein. Zum Bestimmen des Schwellwertes beziehungsweise der Detektionsschwelle, mit welchen die Amplitudenwerte der Signalanteile des Empfangssignals zum Identifizieren von Nutzsignalanteilen in dem Empfangssignal verglichen werden, wird der Rauschpegel basierend auf den Amplitudenwerten beziehungsweise Leistungswerten bestimmt. Dabei kann für bestimmte Teile der Signalanteile, beispielsweise für jede Untermatrix der Range-Doppler-Matrix, in welche die Amplitudenwerte einsortiert werden, jeweils ein spezifischer Rauschpegel und damit ein spezifischer Schwellwert bestimmt werden. Dies bedeutet, dass insbesondere jeweils nur ein Teil der Signalanteile, welche beispielsweise den Abstandswerten aus einem bestimmten Abstandsbereich zugeordnet werden können, zur Bestimmung des Rauschpegels des aus diesem Abstandsbereich empfangenen Empfangssignals verwendet werden.

Zur Bestimmung des Rauschpegels werden die Signalanteile, beispielsweise die Signalanteile einer vorbestimmten Untermatrix der Range-Doppler-Matrix, jeweiligen Amplitudenwertklassen zugeteilt. Mit anderen Worten bedeutet dies, dass die Signalanteile in jeweilige Amplitudenwertklassen einsortiert werden. Jede Amplitudenwertklasse weist dabei insbesondere einen zusammenhängenden, durch eine untere Grenze und eine obere Grenze begrenzten Wertebereich von Amplitudenwerten auf. Die Amplitudenwerte aller Wertebereiche bestimmen den Gesamtwertebereich beginnend bei dem Wert 0 als den minimalen Amplitudenwert bis zu dem maximalen Amplitudenwert.

Dabei werden jeder Amplitudenwertklasse diejenigen Signalanteile zugeteilt, deren Amplitudenwerte innerhalb des Wertebereiches dieser Amplitudenwertklasse sind. Dies bedeutet, dass die einer Amplitudenwertklasse zugeteilten Signalanteile Amplitudenwerte aufweisen, welche zumindest der unteren Grenze und höchstens der oberen Grenze entsprechen. Dann wird für jede Amplitudenwertklasse der Wert der Häufigkeit, insbesondere der absoluten Häufigkeit, der ihr zugeteilten Signalanteile bestimmt. Anders ausgedrückt bedeutet dies, dass für jede Amplitudenwertklasse die Anzahl der ihr zugeteilten Signalanteile bestimmt wird. Dies entspricht der Bestimmung einer Häufigkeitsverteilung der Amplitudenwerte, welche beispielsweise als ein Histogramm darstellbar ist.

Anhand dieser Häufigkeitsverteilung der Amplitudenwerte können für die Amplitudenwertklassen Werte für die kumulative Häufigkeit bestimmt werden. Anders ausgedrückt wird eine kumulative Häufigkeitsverteilung bestimmt. Die für eine Amplitudenwerteklasse bestimmte kumulative Häufigkeit entspricht dabei der Anzahl an Signalanteilen, welche dieser Amplitudenwertklasse und den in einer Folge an Amplitudenwertklassen mit monoton ansteigenden Wertebereichen vorhergehenden Amplitudenwertklassen zugeteilt sind. Anders ausgedrückt entspricht die für eine Amplitudenwertklasse bestimmte kumulative Häufigkeit dabei der Anzahl aller Signalanteile mit Amplitudenwerten beginnend bei dem geringsten Amplitudenwert bis zu der oberen Grenze des zu dieser Amplitudenwertklasse gehörigen Wertebereiches. Die kumulative Häufigkeit ist also eine monoton ansteigende Verteilungsfunktion, bei welcher für jede Amplitudenwertklasse die Häufigkeiten dieser Amplitudenwertklasse sowie der vorhergehenden Amplitudenwertklassen aufsummiert werden.

Es wird dabei die kumulative Häufigkeit zumindest so lange bestimmt, bis der Wert der kumulativen Häufigkeit zumindest dem vorbestimmten Grenzwert entspricht, also gleich dem Grenzwert ist oder den Grenzwert erstmalig überschreitet. Anders ausgedrückt wird die kumulative Häufigkeit beginnend bei der Amplitudenwertklasse mit einem Wertebereich aufweisend den geringsten beziehungsweise kleinsten Amplitudenwert zumindest bis zu derjenigen Amplitudenwertklasse bestimmt, bei welcher der kumulative Häufigkeitswert dem vorbestimmten Grenzwert entspricht oder den vorbestimmten Grenzwert erstmalig überschreitet. Zumindest anhand dieser Amplitudenwertklasse, bei welcher die kumulative Häufigkeit dem vorbestimmten Grenzwert entspricht oder den vorbestimmten Grenzwert erstmalig überschreitet, wird der Rauschpegel bestimmt. Der Rauschpegel kann dabei beispielsweise als einer der Amplitudenwerte aus dem Wertebereich dieser Amplitudenwertklasse, beispielsweise als der Wert der oberen Grenze des Wertebereiches dieser Amplitudenwertklasse, bestimmt werden.

Der Erfindung liegt hierbei die Erkenntnis zugrunde, dass die Einteilung der Signalanteile in Amplitudenwertklassen und die Bestimmung der Häufigkeiten und kumulativen Häufigkeiten in vorteilhafter Weise auch von mehreren Recheneinrichtungen einer Rechenvorrichtung parallel und damit gleichzeitig durchgeführt werden kann. Eine aufwendige Sortierung der Signalanteile nach der Größe der Amplitudenwerte kann somit entfallen. Damit kann der Rauschpegel besonders schnell und einfach bestimmt werden.

Als der Grenzwert wird dabei insbesondere ein vorbestimmter Index eines Elementes in einer mit aufsteigenden Amplitudenwerten der Signalanteile sortierten Folge vorgegeben, wobei der Wert des Elementes mit dem vorbestimmten Index dem Rauschpegel in der sortierten Folge entspricht. Anders ausgedrückt bedeutet dies, dass sich der Amplitudenwert des Signalanteils, welcher dem Rauschpegel entspricht, an einer Position mit dem vorbestimmten Index befinden würde, wenn die Amplitudenwerte ihrer Größe nach sortiert und in der Folge angeordnet werden würden. Alle Signalanteile, welche dabei in der Folge einen geringeren Index als den vorbestimmten Index aufweisen, in der Folge also vor dem als Rauschpegel identifizierten Signalanteil liegen, sind also Rauschanteile. Alle Signalanteile, welche dabei in der Folge einen höheren Index als den vorbestimmten Index aufweisen, in der Folge also hinter dem als Rauschpegel identifizierten Signalanteil liegen, sind also Nutzsignalanteile. Der Index kann beispielsweise anhand von Simulationen bestimmt werden und für die Bestimmung des Rauschpegels vorgegeben werden. Zur Bestimmung des Rauschpegels in dem Empfangssignal müssen die Amplitudenwerte der Signalanteile jedoch nicht der Größe nach sortiert werden, sondern es kann in vorteilhafter Weise nur diejenige Amplitudenwertklasse identifiziert werden, deren kumulativer Häufigkeitswert gleich dem Wert des Index ist oder den Wert des Index erstmalig überschreitet.

Besonders bevorzugt wird für einen ersten Fall, bei welchem der Grenzwert genau der kumulativen Häufigkeit entspricht, der Rauschpegel anhand der zugehörigen Amplitudenwertklasse bestimmt, und für einen zweiten Fall, bei welchem der Grenzwert zwischen den kumulativen Häufigkeiten zweier direkt aufeinanderfolgender Amplitudenwertklassen liegt, der Rauschpegel anhand der zugehörigen, direkt aufeinanderfolgenden Amplitudenwertklassen bestimmt. Im ersten Fall weist also die für eine Amplitudenwertklasse bestimmte kumulierte Häufigkeit den Wert des Grenzwerts auf. Dann wird der Rauschpegel anhand dieser zugehörigen Amplitudenwertklasse bestimmt. In der Regel wird jedoch der zweite Fall eintreten, bei welchem keiner der kumulierten Häufigkeitswerte genau dem Grenzwert entspricht, sondern der Grenzwert vielmehr zwischen zwei direkt aufeinanderfolgenden kumulierten Häufigkeitswerten liegt. Die beiden direkt aufeinanderfolgenden kumulierten Häufigkeitswerte sind dabei diejenigen Werte, welche zu dem Grenzwert die geringste beziehungsweise minimale Abweichung aufweisen, wobei der eine der kumulierten Häufigkeitswerte kleiner und der andere der kumulierten Häufigkeitswerte größer als der Grenzwert ist. Diese beiden kumulierten Häufigkeitswerte werden identifiziert und anhand der zugehörigen Amplitudenwertklassen der Rauschpegel bestimmt. Insbesondere wird der Rauschpegel für diesen zweiten Fall durch lineare Interpolation zwischen den direkt aufeinanderfolgenden Amplitudenwertklassen bestimmt. Anders ausgedrückt wird der Rauschpegel zwischen jeweiligen Amplitudenwerten aus den beiden aufeinanderfolgenden Wertebereichen der aufeinanderfolgenden Amplitudenwertklassen bestimmt. Somit kann der Rauschpegel auf besonders einfache und schnelle Weise bestimmt werden.

In einer vorteilhaften Ausführungsform der Erfindung wird für die Signalanteile jeweils eine Anzahl an zur binären Darstellung der zugehörigen Amplitudenwerte notwendigen Bits bestimmt und die Signalanteile anhand der Anzahl der Bits einer zu einer jeweiligen Amplitudenwertklasse korrespondierenden Bitklasse zugeordnet. Gemäß dieser Ausführungsform wird also die Anzahl an Bits beziehungsweise Ziffern bestimmt, welche zur Überführung der dezimalen Amplitudenwerte in die binäre Darstellung notwendig ist. Außerdem wird jede Amplitudenwertklasse als Bitklasse repräsentiert, indem jede Amplitudenwertklasse durch eine Bitanzahl charakterisiert wird. Die Amplitudenwertklassen werden also so bestimmt, dass in eine Amplitudenwertklasse alle Signalanteile einsortiert werden können, deren Amplitudenwerte mit der zugeordneten Bitanzahl darstellbar sind. Einer ersten Amplitudenwertklasse beziehungsweise Bitklasse kann somit die Bitanzahl "0" zugeordnet werden, wobei alle Signalanteile der ersten Amplitudenwertklasse zugeteilt werden, welche mit null Bits darstellbar sind, einer zweiten Amplitudenwertklasse beziehungsweise Bitklasse kann die Bitanzahl "1" zugeordnet werden, wobei alle Signalanteile der zweiten Amplitudenwertklasse zugeteilt werden, welche mit einem Bit darstellbar sind, einer dritten Amplitudenwertklasse beziehungsweise Bitklasse kann die Bitanzahl "2" zugeordnet werden, wobei alle Signalanteile der dritten Amplitudenwertklasse zugeteilt werden, welche mit zwei Bits darstellbar sind, usw. Die Amplitudenwertklassen können also als eine Folge von natürlichen Zahlen beginnend bei null dargestellt werden, wobei jede natürliche Zahl der zur Darstellung der Amplitudenwerte dieser Amplitudenwertklassen als Binärzahl notwendigen Anzahl an Bits entspricht und damit den Wertebereich charakterisiert. Der Wertebereich der Amplitudenwerte jeder Amplitudenwertklasse kann somit in vorteilhafter Weise besonders einfach und schnell durch eine einzelne Zahl, nämlich die Bitanzahl, vorgegeben werden.

In einer Weiterbildung der Erfindung wird eine Anzahl an Führungsnullen des eine vorbestimmte Wortlänge aufweisenden binären Amplitudenwertes bestimmt und die Anzahl an zur binären Darstellung des Amplitudenwertes notwendigen Bits als die Differenz zwischen der Wortlänge und der Anzahl an Führungsnullen bestimmt. Die Amplitudenwerte werden dabei insbesondere mit einer Wortlänge von 32 Bit binär dargestellt. Dabei befindet sich bei der den Amplitudenwert repräsentierenden Binärzahl mit den Bitpositionen 0, 1,..., 31 insbesondere an der Bitposition 0 das niedrigwertigste Bit beziehungsweise Least Significant Bit (LSB). Die Führungsnullen beziehungsweise führenden Nullen sind dabei die Nullen, welche dem höchstwertigen, den Wert "1" aufweisenden Bit voran stehen. Anders ausgedrückt sind die Führungsnullen, diejenigen Bits mit dem Wert "0", mit welchen die Bitpositionen zum Darstellen des Amplitudenwerts mit 32 Bit nach der Bitposition des höchstwertigen, den Wert "1" aufweisenden Bits aufgefüllt sind. Durch Bestimmen der Anzahl der der Führungsnullen, was auch als "Counting Leading Zeros" (CLZ) bezeichnet wird, und Bilden der Differenz zwischen der Gesamtwortlänge und der Anzahl an Füllnullen kann die notwendige Anzahl an Bits besonders einfach bestimmt werden.

Insbesondere wird die Anzahl an zur binären Darstellung notwendigen Bits als der abgerundete und um den Wert eins erhöhte Zweierlogarithmus des dezimalen Amplitudenwertes bestimmt. Dies bedeutet, dass das Ergebnis des Logarithmus Dualis des dezimalen Amplitudenwerts bestimmt wird, das Ergebnis abgerundet und um den Wert "1" erhöht wird. Somit kann auf besonders schnelle Weise die Anzahl an Bits bestimmt werden, insbesondere ohne den Amplitudenwert in der Binärdarstellung darstellen zu müssen.

In einer Weiterbildung der Erfindung wird für jede Bitklasse die Häufigkeit an zugeordneten Signalanteilen bestimmt. Die Häufigkeiten der Bitklassen werden zumindest bis zu derjenigen Bitklasse zu der kumulativen Häufigkeit aufsummiert, bei welcher die kumulative Häufigkeit zumindest dem vorbestimmten Grenzwert entspricht. Der Rauschpegel wird mittels der Zweierpotenz und mittels derjenigen Bitklasse, deren kumulative Häufigkeit zumindest dem vorbestimmten Grenzwert entspricht, als den Exponenten bestimmt. Mit anderen Worten bedeutet dies, dass die Signalanteile basierend auf der zur Darstellung der Amplitudenwerte notwendigen Bitanzahl gruppiert werden, also in die Amplitudenwertklasse einsortiert werden. Es werden also alle Amplitudenwerte gezählt, welche jeweils mit der gleichen Anzahl an Ziffern als Binärzahl darstellbar sind. Für jede Bitklasse beziehungsweise Amplitudenwertklasse, deren Wertebereich durch die Anzahl an für die Binärdarstellung notwenigen Bits vorgegeben ist, wird also der Häufigkeitswert bestimmt. Diese Häufigkeiten werden zumindest bis zu derjenigen Bitklasse kumuliert, bei welcher der Wert der kumulativen Häufigkeit dem vorbestimmten Grenzwert zumindest entspricht, also gleich dem Grenzwert ist oder den Grenzwert erstmalig überschreitet. Anhand dieser Bitklasse wird dann der Rauschpegel als eine Dezimalzahl bestimmt. Dazu wird die Zweierpotenz gebildet, wobei der Exponent der Bitklasse, also der der Amplitudenklasse zugeordneten Bitanzahl, entspricht. Falls der Grenzwert zwischen den kumulierten Häufigkeitswerten zweier aufeinanderfolgender Bitklassen liegt, so wird der Rauschpegel mittels linearer Interpolation in Abhängigkeit von den Bitklassen bestimmt. Ingesamt kann also durch die Analyse der binären Amplitudenwerte und die Erstellung der Häufigkeitsverteilung der Signalanteile basierend auf der Bitanzahl der zugehörigen Amplitudenwerte auf besonders schnelle Weise der Rauschpegel bestimmt werden.

Besonders bevorzugt wird eine erste Folge mit ersten Folgeelementen bestimmt, deren Indizes den Bitklassen entsprechen und deren Werte als die zu den Bitklassen korrespondierenden Häufigkeiten der Signalanteile bestimmt werden. Anhand der ersten Folge wird eine zweite Folge mit zweiten Folgeelementen bestimmt, deren Indizes den Bitklassen entsprechen und deren Werte als die zu den Bitklassen korrespondierenden kumulativen Häufigkeiten der Signalanteile bestimmt werden. Dabei wird anhand der zweiten Folge zumindest dasjenige zweite Folgeelement bestimmt, dessen Wert zumindest dem vorbestimmten Grenzwert entspricht und dessen Abweichen zu dem vorbestimmten Grenzwert minimal ist, und anhand des Wertes und des Index des bestimmten zweiten Folgeelementes der Rauschpegel in dem Empfangssignal bestimmt. Die erste und die zweite Folge sind Reihen, welche als Vektoren darstellbar sind, bei welchen die Bitklassen, also die Bitanzahlen, durch die Indizes beziehungsweise Position der Folgeelemente in der Folge bestimmt sind und die Häufigkeitswerte beziehungsweise kumulierten Häufigkeitswerte durch den Wert des Folgeelementes vorgegeben sind. Ein erstes Folgeelement weist also den Index "0" auf, ein zweites Folgeelement den Index "1", ein drittes Folgeelement den Index "2", usw. Der Wert des ersten Folgeelementes der ersten Folge entspricht also der Häufigkeit allerSignalanteile, welche mit null Ziffern darstellbar sind, der Wert des zweiten Folgeelementes der ersten Folge entspricht also der Häufigkeit aller Signalanteile, welche mit einer Ziffer darstellbar sind, usw.

Zum Bestimmen eines zweiten Folgeelementes mit einem bestimmten Index werden alle ersten Folgeelemente bis zu dem bestimmten Index aufsummiert. Dabei kann die zweite Folge entweder vollständig bestimmt werden oder nur bis zu demjenigen zweiten Folgeelement, dessen Wert gleich dem Grenzwert ist oder den Grenzwert erstmalig überschreitet. Anhand des Werts dieses zweiten Folgeelements und des Werts des vorhergehenden zweiten Folgeelementes sowie anhand deren Indizes kann durch lineare Interpolation der Rauschpegel bestimmt.

Es erweist sich als vorteilhaft, wenn die Signalanteile zur Parallelisierung der Bestimmung des Rauschpegels auf zumindest zwei Recheneinrichtungen verteilt werden, wobei mittels der zumindest zwei Recheneinrichtungen gleichzeitig zumindest die jeweiligen Häufigkeiten der zugeteilten Signalanteile anhand der Amplitudenwerte bestimmt werden. Mit anderen Worten bedeutet dies, dass ein erster Teil der Signalanteile, beispielsweise ein erster Teil einer Untermatrix, der ersten Recheneinrichtung zugeteilt wird, und ein zumindest ein zweiter Anteil der Signalanteile, beispielsweise ein zweiter Teil der gleichen Untermatrix, der zumindest einen zweiten Recheneinrichtung zugeteilt werden. Jede Recheneinrichtung teilt dann die Amplitudenwerte der Signalanteile in die Amplitudenwertklassen ein und bestimmt die Häufigkeitswerte. Anders ausgedrückt führen die Recheneinrichtungen die jeweils gleiche Rechenoperation, beispielsweise die Bestimmung der Häufigkeiten, für unterschiedliche Teile der Signalanteile gleichzeitig und damit parallel durch. Die von den Recheneinrichtungen ermittelten Ergebnisse können dann zur Bestimmung des Rauschpegels für diese Untermatrix fusioniert beziehungsweise kombiniert werden. Das Verfahren ist somit besonders effizient und zeitsparend gestaltet.

Die Erfindung betrifft außerdem eine Rechenvorrichtung für ein Fahrerassistenzsystem, welche dazu ausgelegt ist, ein erfindungsgemäßes Verfahren durchzuführen. Dies bedeutet, dass die Rechenvorrichtung dazu ausgelegt ist, das von der Sensoreinrichtung erfasste Empfangssignal zu empfangen und zumindest einen Teil der Signalanteile des Empfangssignals anhand der Amplitudenwerte der Signalanteile den jeweiligen Amplitudenwertklassen zuzuteilen. Außerdem ist die Recheneinrichtung insbesondere dazu ausgelegt, für jede Amplitudenwertklasse jeweils eine Häufigkeit der ihr zugeteilten Signalanteile zu bestimmen, die Häufigkeiten der Amplitudenwertklassen zumindest bis zu derjenigen Amplitudenwertklasse zu einer kumulativen Häufigkeit aufzusummieren, bei welcher die kumulative Häufigkeit zumindest einem vorbestimmten Grenzwert entspricht und zumindest anhand derjenigen Amplitudenwertklasse, bei welcher die kumulative Häufigkeit zumindest dem vorbestimmten Grenzwert entspricht, den Rauschpegel zu bestimmen. Vorzugsweise ist dabei vorgesehen, dass die Rechenvorrichtung als eine Parallelrechenvorrichtung ausgebildet ist. Dies bedeutet, dass die Rechenvorrichtung zumindest zwei Recheneinrichtungen aufweist, welche dazu ausgelegt sind, das Verfahren zu parallelisieren. Dies bedeutet beispielsweise, dass die Recheneinrichtungen zumindest einen Teil der Rechenoperationen, beispielsweise die Bestimmung der Häufigkeitswerte, gleichzeitig beziehungsweise parallel auf einem jeweiligen Teil der Signalanteile durchführen.

Des Weiteren betrifft die Erfindung ein Fahrerassistenzsystem für ein Kraftfahrzeug mit zumindest einer Sensoreinrichtung zum Erfassen eines Empfangssignals aus einem Umgebungsbereich des Kraftfahrzeugs und mit einer erfindungsgemäßen Rechenvorrichtung. Die Sensoreinrichtung ist dabei insbesondere eine Radarsensoreinrichtung. Das Fahrerassistenzsystem kann beispielsweise als ein Abstandsregeltempomat, ein Totwinkel-Assistent oder dergleichen ausgebildet sein.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Rechenvorrichtung, für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:

Fig. 1    eine schematische Darstellung einer Ausführungsform eines erfindungsgemäßen Kraftfahrzeugs;

Fig. 2    eine schematische Darstellung eines sogenannten Range-Doppler-Matrix; und

Fig. 3    eine schematische Darstellung eines Ablaufdiagramms einer Ausführungsform eines erfindungsgemäßen Verfahrens.

In den Figuren sind gleiche sowie funktionsgleiche Elemente mit den gleichen Bezugszeichen versehen.

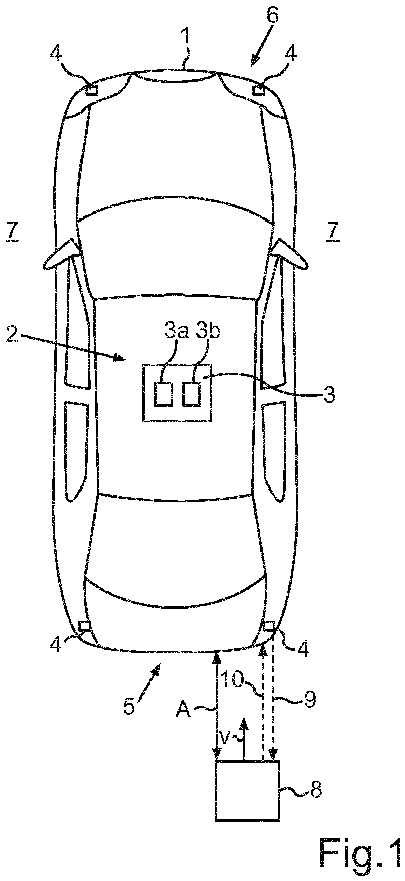

Fig. 1 zeigt ein Kraftfahrzeug 1 gemäß einer Ausführungsform der vorliegenden Erfindung. Das Kraftfahrzeug 1 ist im vorliegenden Fall als ein Personenkraftwagen ausgebildet. Das Kraftfahrzeug 1 umfasst ein Fahrerassistenzsystem 2, welches beispielsweise als ein Parkhilfesystem, ein Abstandsregeltempomat, ein Totwinkel-Assistent oder dergleichen ausgebildet sein kann. Das Fahrerassistenzsystem 2 umfasst eine Rechenvorrichtung 3. Die Rechenvorrichtung 3 ist insbesondere als eine Parallelrechenvorrichtung ausgebildet und umfasst zumindest zwei Recheneinrichtungen 3a, 3b, welche dazu ausgebildet sind, Rechenoperationen gleichzeitig beziehungsweise parallel durchzuführen. Ferner umfasst das Fahrerassistenzsystem 2 zumindest eine Sensoreinrichtung 4, mittels welcher ein Objekt 8 in einem Umgebungsbereich 7 des Kraftfahrzeugs 1 erfasst werden kann. Im vorliegenden Fall umfasst das Fahrerassistenzsystem 2 vier Sensoreinrichtungen 4, wobei zwei Sensoreinrichtungen 4 in einem Heckbereich 5 des Kraftfahrzeugs 1 angeordnet sind und den Umgebungsbereich 7 hinter dem Kraftfahrzeug 1 überwachen und zwei weitere Sensoreinrichtungen 4 in einem Frontbereich 6 des Kraftfahrzeugs 1 angeordnet sind und den Umgebungsbereich 7 vor dem Kraftfahrzeug 1 überwachen. Die Sensoreinrichtungen 4 sind insbesondere als Radarsensoreinrichtungen ausgebildet. Die Radarsensoreinrichtung kann beispielsweise ein 79 GHz Radar sein. Die Sensoreinrichtungen 4 können aber beispielsweise auch als Ultraschallsensoreinrichtungen ausgebildet sein.

Im vorliegenden Fall befindet sich das Objekt 8 hinter dem Kraftfahrzeug 1. Das Objekt 8 kann erfasst werden, indem die beispielsweise als Radarsensoreinrichtung ausgebildete Sensoreinrichtung 4 ein Sendesignal 9 in Form von einer elektromagnetischen Welle in den Umgebungsbereich 7 aussendet, welche von dem Zielobjekt 8 reflektiert wird. Das reflektierte Sendesignal 9, also die reflektierte elektromagnetische Welle, wird als Empfangssignal 10 wieder von der Sensoreinrichtung 4 empfangen. Anhand der Laufzeit des Sendesignals 9 und des Empfangssignals 10, also anhand der Zeitdauer zwischen dem Aussenden des Sendesignals 9 und dem Empfangen des Empfangssignals 10, kann ein Abstand A zwischen der Sensoreinrichtung 4 und dem Objekt 8 bestimmt werden. Anhand einer Dopplerverschiebung des Empfangssignals 10 kann eine Geschwindigkeit v des Objektes 8 bestimmt werden.

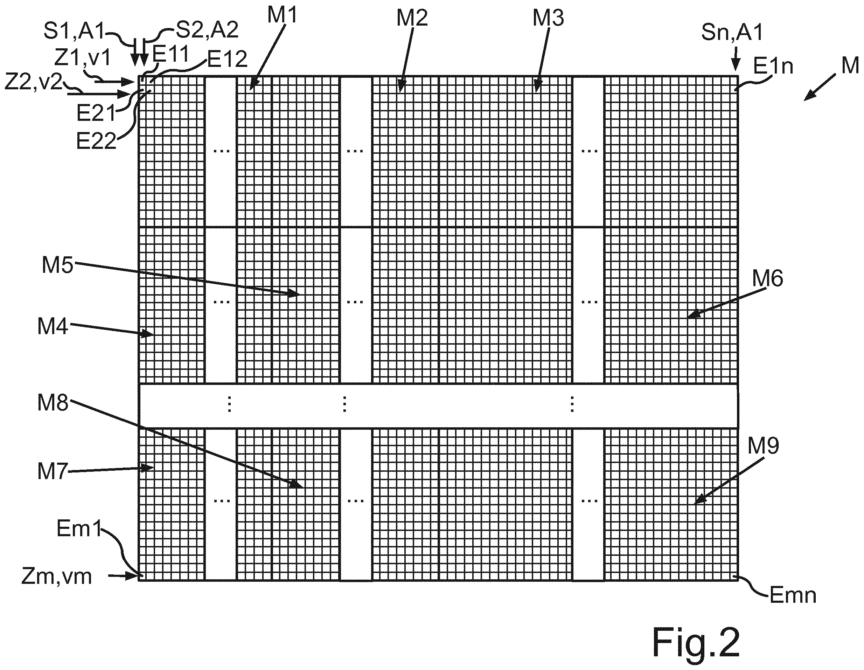

Das Empfangssignal 10 weist dabei eine Vielzahl von Signalanteilen auf, für welche nach der Fourier-Transformation des Empfangssignals 10 Leistungswerte beziehungsweise Amplitudenwerte bestimmt werden. Diese Amplitudenwerte werden dann als Einträge E11, E12, E1m, E21, E22, Em1, Emn in einer Matrix M hinterlegt, welche beispielhaft in Fig. 2 dargestellt ist. Dazu wird zunächst jeder Amplitudenwert einem diskreten Abstandswert A1, A2, An und einem diskreten Geschwindigkeitswert v1, v2, vm zugeordnet. Die Amplitudenwerte der Signalanteile werden nun in diejenige Spalte S1, S2, Sn und diejenige Zeile Z1, Z2, Zm der Matrix M eingetragen, welcher der diskrete Abstandswert A1, A2, An und der diskrete Geschwindigkeitswert v1, v2, vm zugeordnet ist. Der Eintrag E11 der Matrix M ist der Amplitudenwert desjenigen Signalanteils, welchem ein erster diskreter Abstandswert A1 und ein erster diskreter Geschwindigkeitswert v1 zugeordnet sind, usw. Um nun in dem Empfangssignal 10 diejenigen Signalanteile zu identifizieren, welche von der Reflexion an dem Objekt 8 stammen, werden die Amplitudenwerte E11 bis Emn mit Schwellwerten beziehungsweise Detektionsschwellen verglichen. Wenn ein Amplitudenwert E11 bis Emn den Schwellwert überschreitet, wird der zugehörige Signalanteil als Nutzsignal identifiziert und anhand der jeweiligen Spalte S1, S2, Sn und Zeile Z1, Z2, Zm des Amplitudenwertes E11 bis Emn der Abstand A und die Geschwindigkeit v des Objektes 8 bestimmt. Wenn ein Amplitudenwert E11 bis Emn den Schwellwert unterschreitet, wird der zugehörige Signalanteil als Störsignal beziehungsweise Rauschsignal interpretiert und beispielsweise verworfen. Der Schwellwert soll dabei so bestimmt werden, dass eine konstante Falschalarmrate, CFAR (Constant False Alarm Rate), vorgegeben wird, also dass höchstens ein vorbestimmter, konstanter Anteil an Störsignalen den Schwellwert überschreitet. Da der Störsignalanteil in dem Empfangssignal 10 beispielsweise abhängig sein kann von dem Abstandsbereich, aus welchem das Empfangssignal 10 empfangen wird, können dabei für jeweilige Untermatrizen M1, M2, M3, M4, M5, M6, M7, M8, M9 der Matrix M, welchen jeweilige Abstandswertbereiche und Geschwindigkeitswertbereiche zugeteilt sind, spezifische Schwellwerte vorgegeben werden. Dabei werden also die Amplitudenwerte E11 bis Emn einer Untermatrix M1 bis M9 mit dem für die jeweilige Untermatrix M1 bis M9 vorgegebenen Schwellwert verglichen.

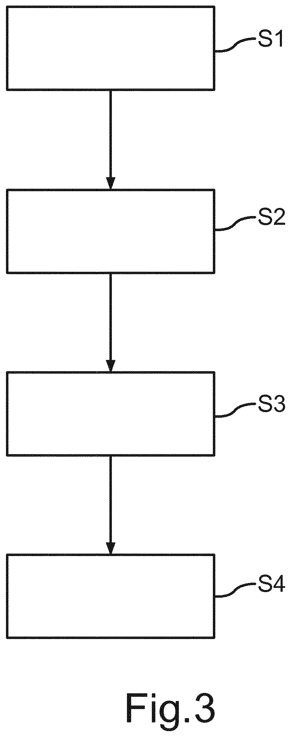

Um den Schwellwert zum Vorgeben der konstanten Falschalarmrate bestimmen zu können, muss zunächst der Rauschpegel in dem Empfangssignal 10 bestimmt werden. Ein Ablaufdiagramm für ein Verfahren zur Bestimmung des Rauschpegels ist in Fig. 3 gezeigt. In einem ersten Schritt S1 des Verfahrens wird dabei eine Häufigkeitsverteilung, welche einem Histogramm entspricht, basierend auf den Amplitudenwerten E11 bis Emn der Signalanteile in dem Empfangssignal 10 erstellt. Das Histogramm kann dabei für jede Untermatrix M1 bis M9 separat erstellt werden, sodass für jede Untermatrix M1 bis M9 der Rauschpegel bestimmt werden kann. Zum Erstellen des Histogramms werden dabei die Amplitudenwerte E11 bis Emn der Signalanteile in dem ersten Schritt S1 in Amplitudenwertklassen einsortiert. Insbesondere wird dazu vor der Erstellung des Histogramms für jeden Signalanteil eine Anzahl an Ziffern beziehungsweise Bits bestimmt, welche für die Binärdarstellung des zugehörigen Amplitudenwertes E11 bis Emn notwendig ist. Die Anzahl an Bits kann dabei für jeden Amplitudenwert E11 bis Emn über folgende Formel (1) bestimmt werden:

$$N = \lfloor ld(E_{mn}) \rfloor + 1$$

Dabei entspricht N der Anzahl an Bits, ld dem Logarithmus Dualis und die eckigen Klammern der Abrundungsfunktion beziehungsweise der Gaußklammer. In Worten bedeutet die Formel (1), dass die Anzahl an Bits bestimmt wird, indem der Zweierlogarithmus eines Amplitudenwertes Emn gebildet wird, das Ergebnis abgerundet wird, und um den Wert eins erhöht wird. Die Amplitudenwerte E11 bis Emn werden dabei anhand der Anzahl an Bits den jeweiligen Amplitudenwertklassen zugeordnet. Jede Amplitudenwertklasse wird dabei durch eine Bitklasse charakterisiert. Anders ausgedrückt bedeutet dies, dass in jede Bitklasse all diejenigen Amplitudenwerte E11 bis Emn einsortiert werden, welche mit der gleichen Anzahl an Bits darstellbar sind. Für jede Amplitudenwertklasse beziehungsweise Bitklasse wird in einem zweiten Schritt S2 des Verfahrens eine Häufigkeit bestimmt. Anders ausgedrückt werden pro Bitklasse alle Signalanteile gezählt, deren Amplitudenwerte mit der gleichen Anzahl an Bits darstellbar sind. Die Verfahrensschritte S1, S2 können dabei von den zumindest zwei Recheneinrichtungen 3a, 3b parallel beziehungsweise gleichzeitig durchgeführt werden.

Die Häufigkeitsverteilung kann beispielsweise als eine erste Folge mit ersten Folgeelementen dargestellt werden, wobei Indizes der ersten Folgeelemente der ersten Folge der jeweiligen Bitklasse, also einer Bitanzahl, entsprechen und wobei Werte der ersten Folgeelemente den jeweiligen Häufigkeiten der Signalanteile in der jeweiligen Bitklasse entsprechen. Anhand der in Schritt S2 bestimmten Häufigkeiten kann in einem dritten Schritt S3 des Verfahrens für jede Amplitudenklasse durch Aufsummieren der Häufigkeiten bis zu dieser Amplitudenklasse ein kumulierter Häufigkeitswert bestimmt werden. Beispielsweise kann anhand der ersten Folge eine zweite Folge mit zweiten Folgeelementen bestimmt werden, deren Indizes ebenfalls den Bitklassen entsprechen und deren Werte kumulierten Häufigkeitswerten entsprechen. Dies bedeutet, dass jeder Bitklasse diejenigen Amplitudenwerte zugeordnet werden können, welche mit der der Bitklasse entsprechenden Anzahl an Ziffern und einer geringeren Anzahl an Ziffern darstellbar sind.

Die kumulierten Häufigkeiten werden dabei zumindest so lange bestimmt, bis derjenige kumulative Häufigkeitswert erreicht wird, welcher entweder einem vorbestimmten Grenzwert entspricht oder den vorbestimmten Grenzwert erstmalig überschreitet. Beispielsweise kann in der zweiten Folge dasjenige Folgeelement gefunden werden, welches dem Grenzwert entspricht oder größer als der Grenzwert ist und dabei eine minimale Abweichung zu dem Grenzwert aufweist. Wenn ein kumulativer Häufigkeitswert aus dieser zweiten Folge genau dem Grenzwert entspricht, so wird anhand dieses kumulativen Häufigkeitswertes sowie der zugeordneten Bitklasse der Rauschpegel in einer Dezimaldarstellung in einem vierten Verfahrensschritt S4 mittels folgender Formel (2) bestimmt:

$$R = 2^{Cindex},$$

wobei R der Rauschpegel ist und Cindex der Index des dem Grenzwert entsprechenden Häufigkeitswertes in der zweiten Folge ist. Der Index entspricht der Anzahl an Bits.

Wenn keiner der kumulativen Häufigkeitswerte dem Grenzwert entspricht, so werden diejenigen beiden kumulativen Häufigkeitswerte, beispielsweise in der zweiten Folge, identifiziert, welche den vorbestimmten Grenzwert umschließen. Es werden also diejenigen kumulativen Häufigkeitswerte bestimmt, zwischen welchen der Grenzwert liegt. Anhand der zugehörigen aufeinanderfolgenden Bitklassen und der Häufigkeitswerte wird dann über lineare Interpolation der Rauschpegel bestimmt. Der Rauschpegel kann beispielsweise über folgende Formel (3) bestimmt werden:

$$R = 2^{Cindex1} + \left(2^{Cindex2} - 2^{Cindex1}\right)\left(\frac{N_F - C1}{C2 - C1}\right)$$

Dabei entspricht R dem Rauschpegel, Cindex1 dem Index und damit der Bitklasse des kumulativen Häufigkeitswertes, welcher kleiner als der Grenzwert $N_F$ ist, Cindex2 dem Index und damit der Bitklasse desjenigen kumulativen Häufigkeitswertes, welcher größer als der Grenzwert $N_F$ ist, C1 dem Wert des zweiten Folgeelementes mit dem Index Cindex1, also dem den Grenzwert $N_F$ unterschreitenden kumulativen Häufigkeitswert, und C2 dem Wert des zweiten Folgeelementes mit dem Index Cindex2, also dem den Grenzwert $N_F$ überschreitenden kumulativen Häufigkeitswert. Der Grenzwert $N_F$ kann dabei als der Index einer Folge bestimmt werden, welchen der Rauschpegel in einer der Größe nach sortierten Reihenfolge der Amplitudenwerte E11 bis Emn der Signalanteile des Empfangssignals 10 aufweisen würde.

Zur Veranschaulichung werden die Schritte S1 bis S4 des Verfahrens im Folgenden anhand eines fiktiven Zahlenbeispiels durchgeführt. Von der Sensoreinrichtung 4 ist beispielsweise ein Empfangssignal 10 empfangen worden, dessen zweiunddreißig dezimale Amplitudenwerte E11 bis Emn (ohne Einheiten) in folgender Folge dargestellt sind:

S={43233, 9005, 503, 333, 62351, 880, 5873, 6146, 4949, 4655, 86, 860, 144, 74707, 5391, 81038, 67, 307, 4248, 8266, 6921, 356, 456, 45454, 3678434, 5659, 76750, 2332, 123, 9065, 34253}.

Gemäß dem Stand der Technik werden dabei die Amplitudenwerte E11 bis Emn der Größe nach sortiert, sodass sich folgende sortierte Folge S_sortiert ergibt:

S_sortiert={67, 86, 123, 144, 307, 333, 356, 456, 503, 860, 880, 2332, 4248, 4655, 4949, 5391, 5659, 5873, 6146, 6921, 8266, 9005, 9065, 34253, 43233, 45454, 62351, 74707, 76750, 81038, 3678434}.

Falls der Grenzwert $N_F$=14 ist, wurde der Wert des Folgeelementes der Folge S_sortiert mit dem Index "14" als der Rauschpegel bestimmt. Wenn der erste Index in der Reihe S_sortiert den Wert "0" aufweist, so ist der Rauschpegel hier durch das fünfzehnte Reihenelement mit dem Wert 4949 vorgegeben.

Im Gegensatz zum Stand der Technik wird jedoch basierend auf der Reihe S die Häufigkeitsverteilung in Schritt S1 als die folgende erste Folge bestimmt:

S_H={0,0,0,0,0,0,0,3,1,5,2,0,1,8,3,0,4,3,0,0,0,0,1,0,0,0,0,0,0,0,0,0,0,0}.

Es existieren in der Folge S mit den von der Sensoreinrichtung 4 empfangenden Signalanteilen also drei Signalanteile, deren Amplitudenwerte mit sieben Ziffern darstellbar sind. Das Folgeelement mit dem Indexwert "7" (beginnend bei "0") weist also den Wert drei auf, welcher der Häufigkeit entspricht. Außerdem weist das Empfangssignal 10 hier einen Signalanteil auf, dessen Amplitudenwert mit acht Ziffern darstellbar ist. Das Folgeelement mit dem Indexwert "8" weist also den Wert eins auf, welcher der Häufigkeit entspricht. Außerdem umfasst das Empfangssignal 10 hier fünft Signalanteile, deren Amplitudenwerte mit neun Ziffern darstellbar sind, usw. Das Folgeelement mit dem Indexwert "9" weist also den Wert fünf auf, welcher der Häufigkeit entspricht, usw.

Basierend auf der Folge S_H kann dann eine kumulierte Häufigkeitsverteilung als folgende Folge S_Hkum bestimmt werden:

S_Hkum={0,0,0,0,0,0,0,3,4,9,11,11,12,20,23,23,27,30,30,30,30,30,31,31,31,31,31,31,31, 31,31}.

Nun werden diejenigen Werte C1, C2 der Folgeelemente der Folge S_Hkum identifiziert, welche den Grenzwert $N_F$=14 umschließen. Dies sind hier die Werte C1=12 und C2 =20 mit den Indizes Cindex1=12 und Cindex2=13. Anhand von Formel (3) kann der Rauschpegel R= $2^{12}$+($2^{13}$-$2^{12}$)*(14-12)/(20-12)=5120 bestimmt werden.

**Patentansprüche**

1. Verfahren zum Bestimmen eines Rauschpegels in einem von einer fahrzeugseitigen Sensoreinrichtung (4) aus einem Umgebungsbereich (7) eines Kraftfahrzeugs (1) empfangenen Empfangssignal (10), wobei bei dem Verfahren Amplitudenwerte (E11, E12, E1m, E21, E22, Em1, Emn) von Signalanteilen in dem Empfangssignal (10) bestimmt werden,
   **dadurch gekennzeichnet, dass**

   - die Signalanteile anhand ihrer Amplitudenwerte (E11, E12, E1m, E21, E22, Em1, Emn) jeweiligen Amplitudenwertklassen zugeteilt werden (S1);
   - für jede Amplitudenwertklasse jeweils eine Häufigkeit der ihr zugeteilten Signalanteile bestimmt wird (S2);
   - die Häufigkeiten der Amplitudenwertklassen zumindest bis zu derjenigen Amplitudenwertklasse zu einer kumulativen Häufigkeit aufsummiert werden, bei welcher die kumulative Häufigkeit zumindest einem vorbestimmten Grenzwert entspricht (S3),
   - zumindest anhand derjenigen Amplitudenwertklasse, bei welcher die kumulative Häufigkeit zumindest dem vorbestimmten Grenzwert entspricht, der Rauschpegel bestimmt wird (S4).

2. Verfahren nach Anspruch 1,
   **dadurch gekennzeichnet, dass**

- für einen ersten Fall, bei welchem der Grenzwert genau der kumulativen Häufigkeit entspricht, der Rauschpegel anhand der zugehörigen Amplitudenwertklassen bestimmt wird, und
- für einen zweiten Fall, bei welchem der Grenzwert zwischen den kumulativen Häufigkeiten zweier direkt aufeinanderfolgender Amplitudenwertklassen liegt, der Rauschpegel anhand der zugehörigen direkt aufeinanderfolgenden Amplitudenwertklassen bestimmt wird.

3. Verfahren nach Anspruch 2,
**dadurch gekennzeichnet, dass**
für den zweiten Fall der Rauschpegel durch lineare Interpolation zwischen den direkt aufeinanderfolgenden Amplitudenwertklassen bestimmt wird.

4. Verfahren nach einem der vorhergehenden Ansprüche,
**dadurch gekennzeichnet, dass**
für die Signalanteile jeweils eine Anzahl an zur binären Darstellung der zugehörigen Amplitudenwerte (E11, E12, E1m, E21, E22, Em1, Emn) notwendigen Bits bestimmt wird und die Signalanteile anhand der Anzahl der Bits einer zu einer jeweiligen Amplitudenwertklasse korrespondierenden Bitklasse zugeordnet werden.

5. Verfahren nach Anspruch 4,
**dadurch gekennzeichnet, dass**
eine Anzahl an Führungsnullen des eine vorbestimmte Wortlänge aufweisenden binären Amplitudenwertes (E11, E12, E1m, E21, E22, Em1, Emn) bestimmt wird und die Anzahl an zur binären Darstellung des Amplitudenwertes (E11, E12, E1m, E21, E22, Em1, Emn) notwendigen Bits als die Differenz zwischen der Wortlänge und der Anzahl an Führungsnullen bestimmt wird.

6. Verfahren nach Anspruch 5,
**dadurch gekennzeichnet, dass**
die Amplitudenwerte (E11, E12, E1m, E21, E22, Em1, Emn) mit einer jeweiligen Wortlänge von 32 Bit binär dargestellt werden.

7. Verfahren nach einem der Ansprüche 4 bis 6,
**dadurch gekennzeichnet, dass**
der abgerundete und um den Wert eins erhöhte Zweierlogarithmus des dezimalen Amplitudenwertes (E11, E12, E1m, E21, E22, Em1, Emn) als die Anzahl an zur binären Darstellung des Amplitudenwertes (E11, E12, E1m, E21, E22, Em1, Emn) notwendigen Bits bestimmt wird.

8. Verfahren nach einem der Ansprüche 4 bis 7,
**dadurch gekennzeichnet, dass**
für jede Bitklasse die Häufigkeit an zugeordneten Signalanteilen bestimmt wird, die Häufigkeiten der Bitklassen zumindest bis zu derjenigen Bitklasse zu der kumulativen Häufigkeit aufsummiert werden, bei welcher die kumulative Häufigkeit zumindest dem vorbestimmten Grenzwert entspricht, und der Rauschpegel mittels der Zweierpotenz und mittels derjenigen Bitklasse, deren kumulative Häufigkeit zumindest dem vorbestimmten Grenzwert entspricht, als den Exponenten bestimmt wird.

9. Verfahren nach einem der Ansprüche 4 bis 8,
**dadurch gekennzeichnet, dass**
eine erste Folge mit ersten Folgeelementen bestimmt wird, deren Indizes den Bitklassen entsprechen und deren Werte als die zu den Bitklassen korrespondierenden Häufigkeiten der Signalanteile bestimmt werden, anhand der ersten Folge eine zweite Folge mit zweiten Folgeelementen bestimmt wird, deren Indizes den Bitklassen entsprechen und deren Werte als die zu den Bitklassen korrespondierenden kumulativen Häufigkeiten der Signalanteile bestimmt werden, wobei anhand der zweiten Folge zumindest dasjenige zweite Folgeelement bestimmt wird, dessen Wert dem vorbestimmten Grenzwert entspricht und dessen Abweichung zu dem vorbestimmten Grenzwert minimal ist, und anhand des Wertes und des Index des bestimmten zweiten Folgeelementes der Rauschpegel in dem Empfangssignal bestimmt wird.

10. Verfahren nach einem der vorhergehenden Ansprüche,
**dadurch gekennzeichnet, dass**
die Signalanteile zur Parallelisierung der Bestimmung des Rauschpegels auf zumindest zwei Recheneinrichtungen (3a, 3b) verteilt werden, wobei mittels der zumindest zwei Recheneinrichtungen (3a, 3b) gleichzeitig zumindest die jeweiligen Häufigkeiten der zugeteilten Signalanteile anhand der Amplitudenwerte (E11, E12, E1m, E21, E22, Em1, Emn) bestimmt werden.

11. Verfahren nach einem der vorhergehenden Ansprüche,
**dadurch gekennzeichnet, dass**
als der Grenzwert ein vorbestimmter Index eines Elementes in einer, mit aufsteigenden Amplitudenwerten (E11, E12, E1m, E21, E22, Em1, Emn) der Signalanteile sortierten Folge vorgegeben wird, wobei das Element mit dem vorbestimmten Index dem Rauschpegel in der sortierten Folge entspricht.

12. Rechenvorrichtung (3) für ein Fahrerassistenzsystem (2) eines Kraftfahrzeugs (1), welche dazu ausgelegt ist, ein Verfahren nach einem der vorhergehenden Ansprüche durchzuführen.

13. Rechenvorrichtung (3) nach Anspruch 12,
**dadurch gekennzeichnet, dass**
die Rechenvorrichtung (3) als eine Parallelrechenvorrichtung ausgebildet ist.

14. Fahrerassistenzsystem (2) für ein Kraftfahrzeug (1) mit zumindest einer Sensoreinrichtung (4) zum Erfassen eines Empfangssignals (10) aus einem Umgebungsbereich (7) des Kraftfahrzeugs (1) und mit einer Rechenvorrichtung (3) nach Anspruch 12 oder 13.

15. Kraftfahrzeug (1) mit einem Fahrerassistenzsystem (2) nach Anspruch 14.

Fig.1

Fig.2

EP 3 223 033 A1

Fig.3

**Europäisches Patentamt**
**European Patent Office**
**Office européen des brevets**

# EUROPÄISCHER RECHERCHENBERICHT

Nummer der Anmeldung

EP 17 15 8081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2012 024999 A1 (VALEO SCHALTER & SENSOREN GMBH [DE]) 26. Juni 2014 (2014-06-26) | 1-15 | INV. G01S13/93 G01S7/35 |
| Y | * Absätze [0001], [0002], [0006], [0008], [0009], [0014] - [0016], [0024] - [0027], [0036], [0037], [0047] - [0053], [0061] - [0065]; Abbildungen 2-5 * ----- | 4-9 | G01S7/292 ADD. G01S15/93 |
| Y | DE 197 38 252 A1 (DAIMLER BENZ AEROSPACE AG [DE]) 4. März 1999 (1999-03-04) * Seite 2, Zeilen 25-43 * * Seite 4, Zeile 5 - Seite 5, Zeile 26; Abbildungen 1,2 * ----- | 4-9 | |
| A,D | EP 1 804 076 A2 (VALEO RAYTHEON SYSTEMS INC [US]) 4. Juli 2007 (2007-07-04) * das ganze Dokument * ----- | 1-15 | |
| E | WO 2017/089149 A1 (VALEO SCHALTER & SENSOREN GMBH [DE]) 1. Juni 2017 (2017-06-01) * das ganze Dokument * ----- | 1-15 | RECHERCHIERTE SACHGEBIETE (IPC) G01S |

Der vorliegende Recherchenbericht wurde für alle Patentansprüche erstellt

| Recherchenort | Abschlußdatum der Recherche | Prüfer |
|---|---|---|
| München | 22. August 2017 | Schmelz, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 15 8081

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-08-2017

| Im Recherchenbericht angeführtes Patentdokument | Datum der Veröffentlichung | Mitglied(er) der Patentfamilie | Datum der Veröffentlichung |
|---|---|---|---|
| DE 102012024999 A1 | 26-06-2014 | DE 102012024999 A1<br>EP 2936196 A1<br>US 2015331098 A1<br>WO 2014095965 A1 | 26-06-2014<br>28-10-2015<br>19-11-2015<br>26-06-2014 |
| DE 19738252 A1 | 04-03-1999 | AT 295967 T<br>AU 9439198 A<br>DE 19738252 A1<br>EP 0935762 A1<br>US 6040797 A<br>WO 9912051 A1 | 15-06-2005<br>22-03-1999<br>04-03-1999<br>18-08-1999<br>21-03-2000<br>11-03-1999 |
| EP 1804076 A2 | 04-07-2007 | EP 1804076 A2<br>JP 5497252 B2<br>JP 2007183275 A<br>US 7336219 B1 | 04-07-2007<br>21-05-2014<br>19-07-2007<br>26-02-2008 |
| WO 2017089149 A1 | 01-06-2017 | DE 102015120520 A1<br>WO 2017089149 A1 | 01-06-2017<br>01-06-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 1804076 A2